(19) Europäisches Patentamt
European Patent Office
Office européen des brevets

(11) **EP 4 290 968 A1**

(12) **EUROPEAN PATENT APPLICATION**
published in accordance with Art. 153(4) EPC

(43) Date of publication:
**13.12.2023 Bulletin 2023/50**

(21) Application number: **22749993.6**

(22) Date of filing: **28.01.2022**

(51) International Patent Classification (IPC):
**H04W 72/14** (2009.01)    **H04W 72/12** (2023.01)
**H04W 72/04** (2023.01)    **H04W 4/40** (2018.01)
**H04W 92/18** (2009.01)

(52) Cooperative Patent Classification (CPC):
**H04W 4/40; H04W 72/04; H04W 72/12;
H04W 72/23; H04W 92/18**

(86) International application number:
**PCT/KR2022/001635**

(87) International publication number:
**WO 2022/169244 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.02.2021  US 202163145950 P
16.03.2021  KR 20210034108**

(71) Applicant: **LG Electronics Inc.
Yeongdeungpo-gu
Seoul 07336 (KR)**

(72) Inventors:
• **KO, Woosuk
  Seoul 06772 (KR)**
• **LEE, Seungmin
  Seoul 06772 (KR)**

(74) Representative: **Plasseraud IP
66, rue de la Chaussée d'Antin
75440 Paris Cedex 09 (FR)**

(54) **METHOD AND DEVICE FOR DETERMINING SL RESOURCE IN NR V2X**

(57)    Provided are a method by which a first device performs wireless communication, and a device supporting same. The method comprises the steps of: receiving, from a base station, a radio resource control (RRC) message including information related to a time offset of a configured grant (CG) resource and information related to a period of the CG resource; determining a reference logical slot; and determining a slot including the CG resource within the period on the basis of the reference logical slot and the information related to the time offset, wherein the slot occurs after the time offset from the reference logical slot, and the reference logical slot may be the closest complete sidelink (SL) logical slot in a time domain after the starting time of a system frame number (SFN) having a first index.

FIG. 12

```
receiving, from base station, RRC message including
information related to time offset of CG resource      — S1210
and information related to period of CG resource

determining reference logical slot      — S1220

determining, based on information
related to time offset and reference logical slot,      — S1230
slot including CG resource within period
```

EP 4 290 968 A1

**Description**

**TECHNICAL FIELD**

This disclosure relates to a wireless communication system.

**BACKGROUND ART**

Sidelink (SL) communication is a communication scheme in which a direct link is established between User Equipments (UEs) and the UEs exchange voice and data directly with each other without intervention of a base station. SL communication is under consideration as a solution to the overhead of the base station caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

**DISCLOSURE**

**TECHNICAL PROBLEM**

Meanwhile, according to the prior art for determining SL configured grant (CG) type 1 resources, there is an ambiguity in applying an offset and a period based on logical slots with respect to SFN=0 if time synchronization is not aligned between the Uu link and the SL. That is, if the boundary is not aligned between a SL logical slot and SFN=0, the UE cannot determine the location and number of SL logical slots belonging to the period with respect to the SFN.

**TECHNICAL SOLUTION**

In an embodiment, provided is a method for performing wireless communication by a first device. The method may comprise: receiving, from a base station, a radio resource control (RRC) message including information related to a time offset of a configured grant (CG) resource and information related to a period of the CG resource; determining a reference logical slot; and determining, based on the information related to the time offset and the reference logical slot, a slot including the CG resource within the period, wherein the slot occurs after the time offset from the reference logical slot, and wherein the reference logical slot is a complete sidelink (SL) logical slot closest in a time domain after a starting time of a system frame number (SFN) with a first index.

In an embodiment, provided is a first device adapted to perform wireless communication. The first device may comprise: one or more memories storing instructions; one or more transceivers; and one or more processors connected to the one or more memories and the one or more transceivers. The one or more processors may execute the instructions to: receive, from a base station, a radio resource control (RRC) message including information related to a time offset of a configured grant (CG) resource and information related to a period of the CG resource; determine a reference logical slot; and determine, based on the information related to the time offset and the reference logical slot, a slot including the CG resource within the period, wherein the slot occurs after the time offset from the reference logical slot, and wherein the reference logical slot is a complete sidelink (SL) logical slot closest in a time domain after a starting time of a system frame number (SFN) with a first index.

**ADVANTAGEOUS EFFECTS**

The UE can determine SL configured grant (CG) resources without ambiguity.

**BRIEF DESCRIPTION OF THE DRAWINGS**

FIG. 1 shows a structure of an NR system, based on an embodiment of the present disclosure.

FIG. 2 shows a radio protocol architecture, based on an embodiment of the present disclosure.

FIG. 3 shows a structure of a radio frame of an NR, based on an embodiment of the present disclosure.

FIG. 4 shows a structure of a slot of an NR frame, based on an embodiment of the present disclosure.

FIG. 5 shows an example of a BWP, based on an embodiment of the present disclosure.

FIG. 6 shows a procedure of performing V2X or SL communication by a UE based on a transmission mode, based on an embodiment of the present disclosure.

FIG. 7 shows three cast types, based on an embodiment of the present disclosure.

FIG. 8 shows a method for a UE to determine a location of a reference logical slot of SL CG resources if time synchronization is aligned between the Uu link and the SL.

FIG. 9 is a diagram for explaining a problem in which a UE cannot accurately determine a location of a reference logical slot of SL CG resources if time synchronization is not aligned between the Uu link and the SL.

FIG. 10 shows a method for a UE to determine a complete SL logical slot as a reference logical slot, based on an embodiment of the present disclosure.

FIG. 11 shows a method for a UE to determine a complete SL logical slot as a reference logical slot, based on an embodiment of the present disclosure.

FIG. 12 shows a method for a first device to perform wireless communication, based on an embodiment of the present disclosure.

FIG. 13 shows a method for a base station to perform wireless communication, based on an embodiment of the present disclosure.

FIG. 14 shows a communication system 1, based on an embodiment of the present disclosure.

FIG. 15 shows wireless devices, based on an embodiment of the present disclosure.

FIG. 16 shows a signal process circuit for a transmission signal, based on an embodiment of the present disclosure.

FIG. 17 shows another example of a wireless device, based on an embodiment of the present disclosure.

FIG. 18 shows a hand-held device, based on an embodiment of the present disclosure.

FIG. 19 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on 5G NR. However, technical features according to an embodiment of the present disclosure will not be limited only to this.

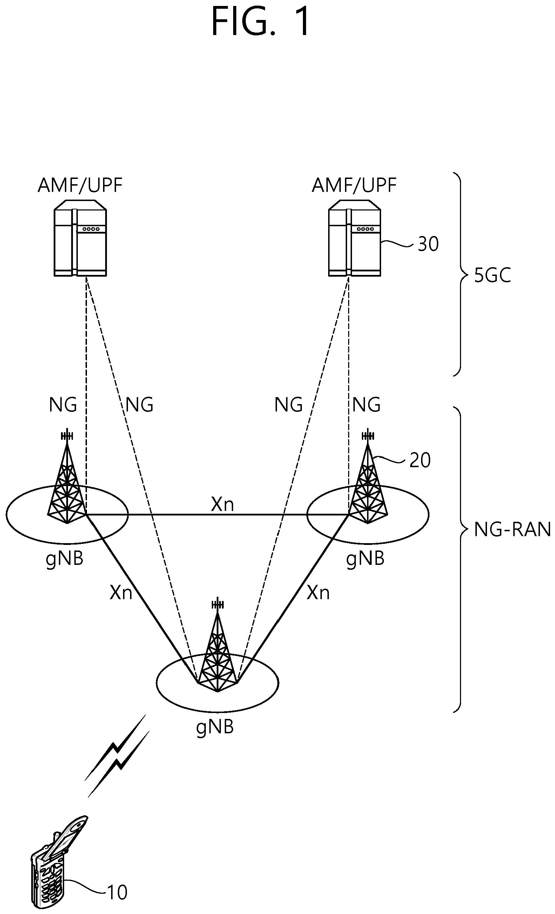

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

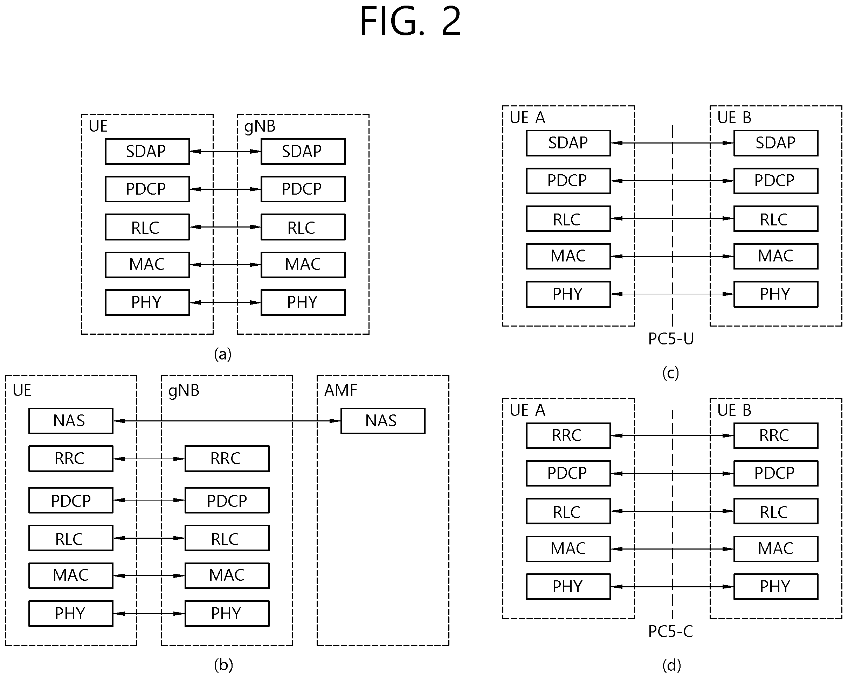

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

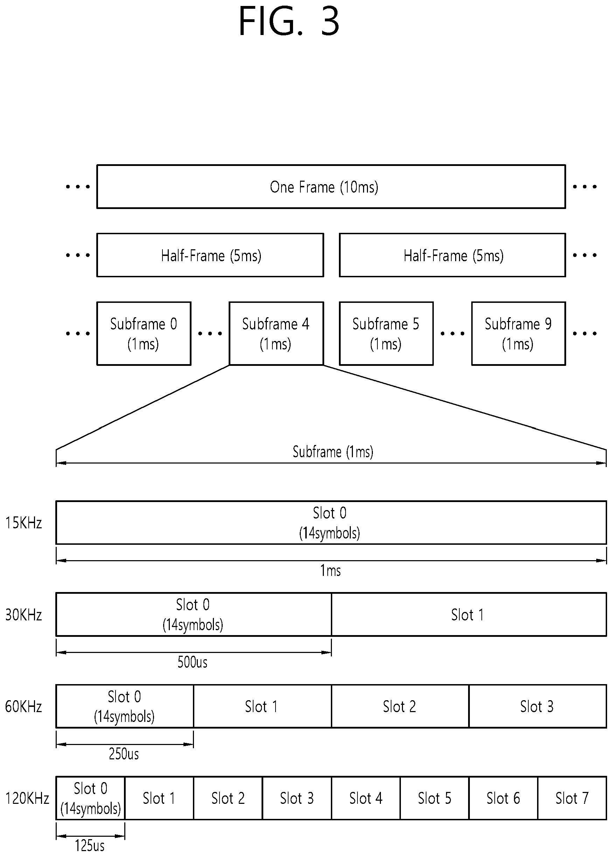

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

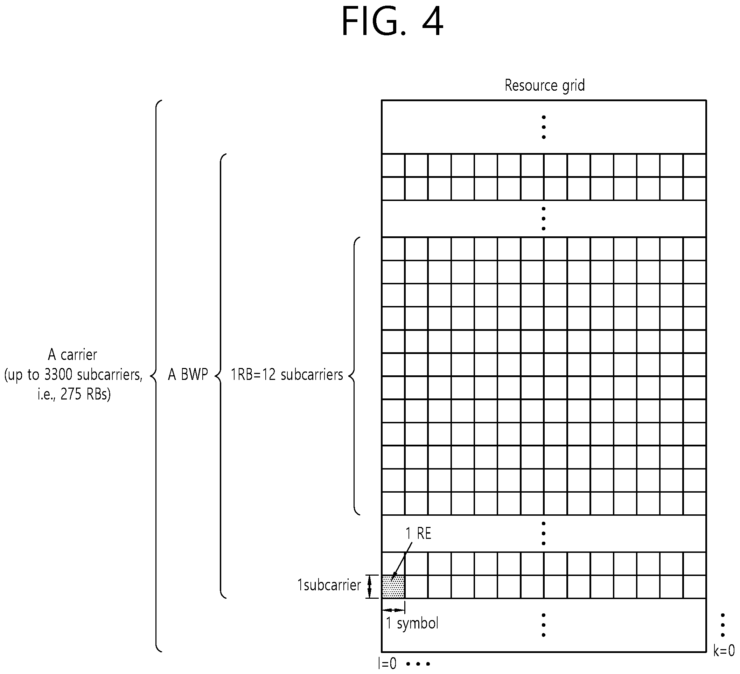

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

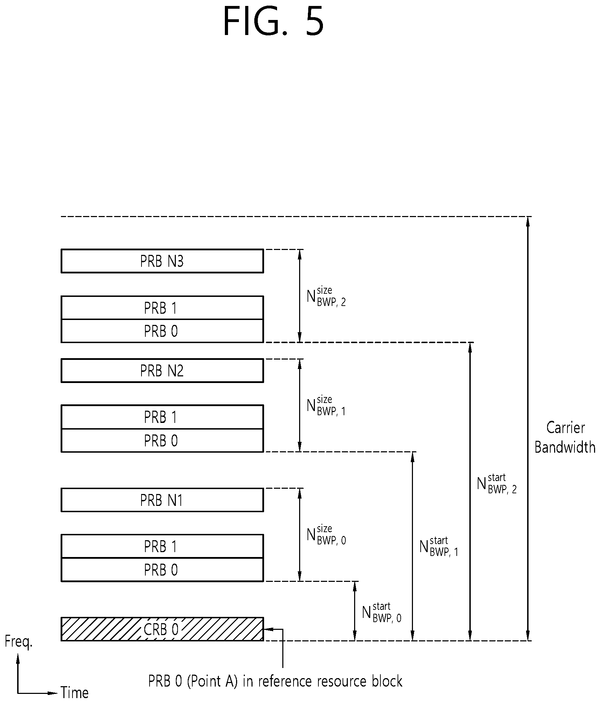

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

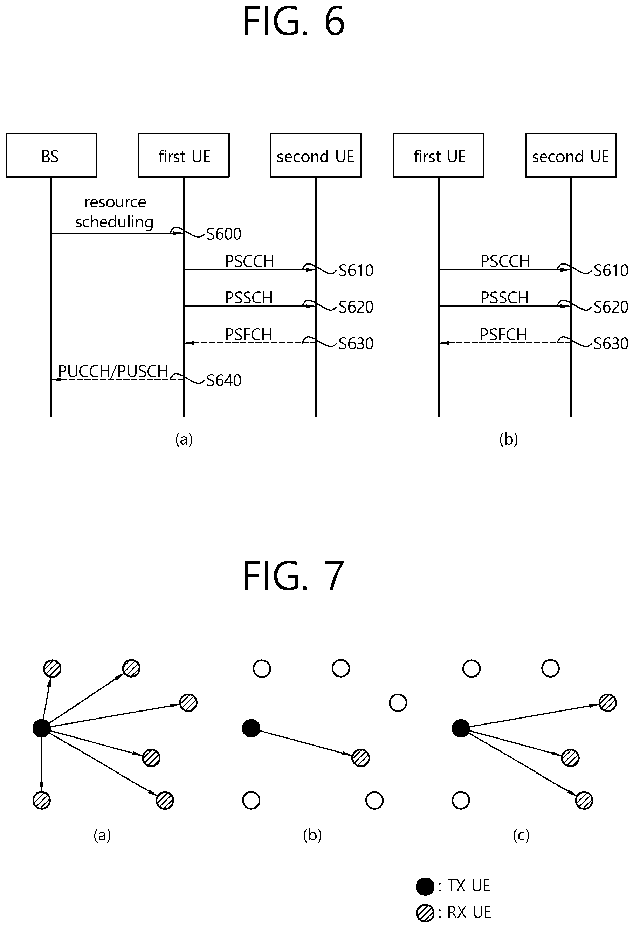

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:

- Resource pool index - ceiling ($\log_2 I$) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling ($\log2(N^{SL}_{subChannel})$) bits
- SCI format 1-A fields: frequency resource assignment, time resource assignment
- PSFCH-to-HARQ feedback timing indicator - ceiling ($\log_2 N_{fb\_timing}$) bits, where $N_{fb\_timing}$ is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)12))$ bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
|---|---|
| 00 | SCI format 2-A |
| 01 | SCI format 2-B |
| 10 | Reserved |
| 11 | Reserved |

[Table 6]

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits

- HARQ feedback enabled/disabled indicator - 1 bit
- Cast type indicator - 2 bits as defined in Table 7
- CSI request - 1 bit

[Table 7]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

FIG. 7 shows three cast types, based on an embodiment of the present disclosure. The embodiment of FIG. 7 may be combined with various embodiments of the present disclosure. Specifically, (a) of FIG. 7 shows broadcast-type SL communication, (b) of FIG. 7 shows unicast type-SL communication, and (c) of FIG. 7 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Meanwhile, the UE may determine a SL resource pool based on Table 8.

[Table 8]

In the frequency domain, a sidelink resource pool consists of *sl-NumSubchannel* contiguous sub-channels. A sub-channel consists of *sl-SubchannelSize* contiguous PRBs, where *sl-NumSubchannel* and *sl-SubchannelSize* are higher layer parameters.

The set of slots that may belong to a sidelink resource pool is denoted by ( $t_0^{SL}, t_1^{SL}, \cdots, t_{Tmax-1}^{SL}$ ) where

- $0 \leq t_i^{SL} < 10240 \times 2^{\mu}$ , $0 \leq i < T_{max}$,
- the slot index is relative to slot#0 of the radio frame corresponding to SFN 0 of the serving cell or DFN 0,
- the set includes all the slots except the following slots,
  - $N_{S\_SSB}$ slots in which S-SS/PSBCH block (S-SSB) is configured,

(continued)

- $N_{nonSL}$ slots in each of which at least one of *Y-th, (Y+1)-th, ..., (Y+X-1)-th* OFDM symbols are not semi-statically configured as UL as per the higher layer parameter *tdd-UL-DL-Configuration Common* of the serving cell if provided or *sl-TDD-Configuration* if provided or *sl-TDD-Config* of the received PSBCH if provided, where *Y* and *X* are set by the higher layer parameters *sl-StartSymbol* and *sl-LengthSymbols,* respectively.

- The reserved slots which are determined by the following steps.

1) the remaining slots excluding $N_{S\_SSB}$ slots and $N_{nonSL}$ slots from the set of all the slots are denoted by ($l_0, l_1, \cdots, l_{(10240 \times 2^{\mu} - N_{S_{SSB}} - N_{nonSL} - 1)}$) arranged in increasing order of slot index.

2) a slot $l_r$ ($0 \leq r < 10240 \times 2^{\mu} - N_{SSSB} - N_{nonSL}$) belongs to the reserved slots if $r = \left\lfloor \frac{m \cdot (10240 \times 2^{\mu} - N_{S_{SSB}} - N_{nonSL})}{N_{reserved}} \right\rfloor$, here $m = 0, 1, \cdots, N_{reserved} - 1$ and $N_{reserved} = (10240 \times 2^{\mu} - N_{SSSB} - N_{nonSL}) \bmod L_{bitmap}$ where $L_{bitmap}$ denotes the length of bitmap configured by higher layers.

- The slots in the set are arranged in increasing order of slot index.

The UE determines the set of slots assigned to a sidelink resource pool as follows:

- a bitmap ($b_0, b_1, ..., b_{L_{bitmap}-1}$) associated with the resource pool is used where $L_{bitmap}$ the length of the bitmap is configured by higher layers.

- a slot $t_k^{SL}$ ($0 \leq k < 10240 \times 2^{\mu l} - N_{S_{SSB}} - N_{nonSL} - N_{reserved}$) belongs to the set if $b_{k'} = 1$ where $k' = k \bmod L_{bitmap}$.

- The slots in the set are re-indexed such that the subscripts i of the remaining slots $t_i'^{SL}$ are successive {0, 1, ..., $T'_{max}$ - 11 where $T'_{max}$ is the number of the slots remaining in the set.

The UE determines the set of resource blocks assigned to a sidelink resource pool as follows:

- The resource block pool consists of $N_{PRB}$ PRBs.

- The sub-channel $m$ for $m = 0, 1, \cdots, numSubchannel$ - 1 consists of a set of $n_{subCHsize}$ contiguous resource blocks with the physical resource block number $n_{PRB} = n_{subCHRBstart} + m \cdot n_{subCHsize} + j$ for $j = 0, 1, \cdots, n_{subCHsize}$ - 1, where $n_{subCHRBstart}$ and $n_{subCHsize}$ are given by higher layer parameters *sl-StartRB-Subchannel* and *sl-SubchannelSize* respectively

A UE is not expected to use the last $N_{PRB} \bmod n_{subCHsize}$ PRBs in the resource pool.

In the present disclosure, a logical slot or a SL logical slot may refer to a slot belonging to the SL resource pool.

Meanwhile, the UE may determine SL CG type 1 resources or SL CG type 2 resources based on Table 9.

[Table 9]

The detail equation for CG type1 is as following: Current_slot = (referenceSlot_RP + sl_TimeOffsetCGType1_RP + S × sl_periodCG_RP)modulo $N_{slot}^{RP}$ (1)

Where:

✓ $N_{slot}^{RP}$ : the total number of logical slots of the associated resource pool within SFN period

✓ sl TimeOffsetCGType1_RP : the slot offset between the first CG resource slot and referenceSlot_RP

✓ sl_periodCG_RP : the period of SL CG resources.

(continued)

> ✓ Current_slot : current logical slot in the resource pool whose value range is [0, $[0, N_{slot}^{RP} - 1]$ ]
> ✓ S : the index of CG radio resource, S>=0
> ✓ referenceSlot_RP : the reference slot which could be either 1st slot within associated resource pool i.e. zero or the slot index equals to $N_{slot}^{RP}/2$
>
> For CG type2, the equation is as following:
>
> Current_slot = (Slot_start + S × sl_periodCG_RP)modulo $N_{slot}^{RP}$ (2)
> Where:
> Parameters Current_slot, S, sl_periodCG_RP share the same meaning as those in equation (1). Slot_start refers the slot index of the first PSSCH duration after the configured sidelink grant was (re-)initialised.

Meanwhile, according to the conventional technology for determining SL CG type 1 resources, there is a problem of ambiguity in applying an offset and a period based on the logical slots with respect to SFN=0 if time synchronization is not aligned between the Uu link and the SL. That is, if the boundary of the SL logical slot is not aligned with SFN=0, the UE cannot determine the location and number of SL logical slots belonging to a period based on the SFN. Hereinafter, it will be described in detail with reference to the figures.

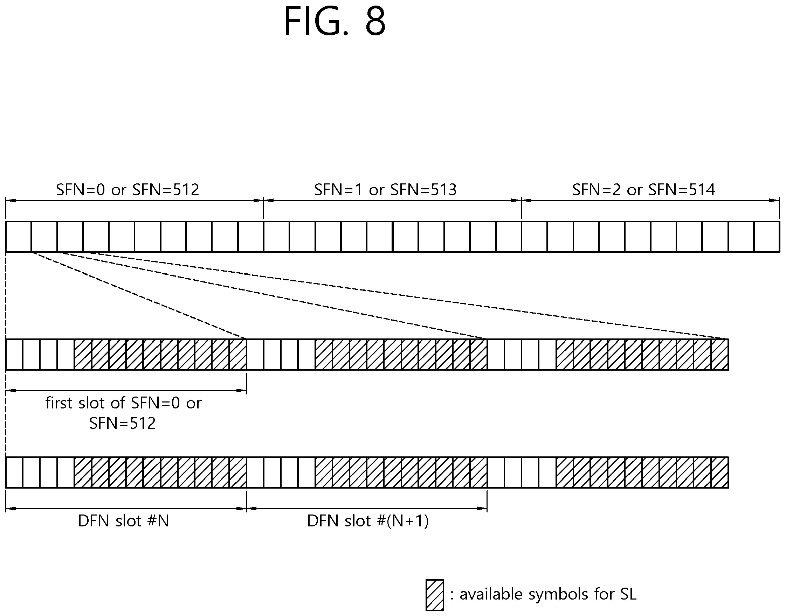

FIG. 8 shows a method for a UE to determine a location of a reference logical slot of SL CG resources if time synchronization is aligned between the Uu link and the SL. The embodiment of FIG. 8 may be combined with various embodiments of the present disclosure.

In the embodiment of FIG. 8, it is assumed that a SL logical slot belonging to a resource pool should include at least 10 SL symbols. That is, the starting symbol (i.e., sl-StartSymbol) used for SL in the slot may be the fifth symbol (i.e., sl-StartSymbol = sym4), and the number of symbols (sl-LengthSymbols) used for SL in a slot may be 10. Furthermore, in the embodiment of FIG. 8, it is assumed that the first slot within SFN=0 or SFN=512 includes 10 SL symbols, and the boundary is aligned between DFN and SFN. In this case, according to the current standard, the UE may use the first logical slot of the associated resource pool after the starting time of the closest SFN=0 or SFN=512 as a reference logical slot. Accordingly, the UE may use DFN slot #N as a reference logical slot. In addition, the UE may determine that the first SL CG resource within the period occurs in a slot spaced apart from the reference logical slot by an offset.

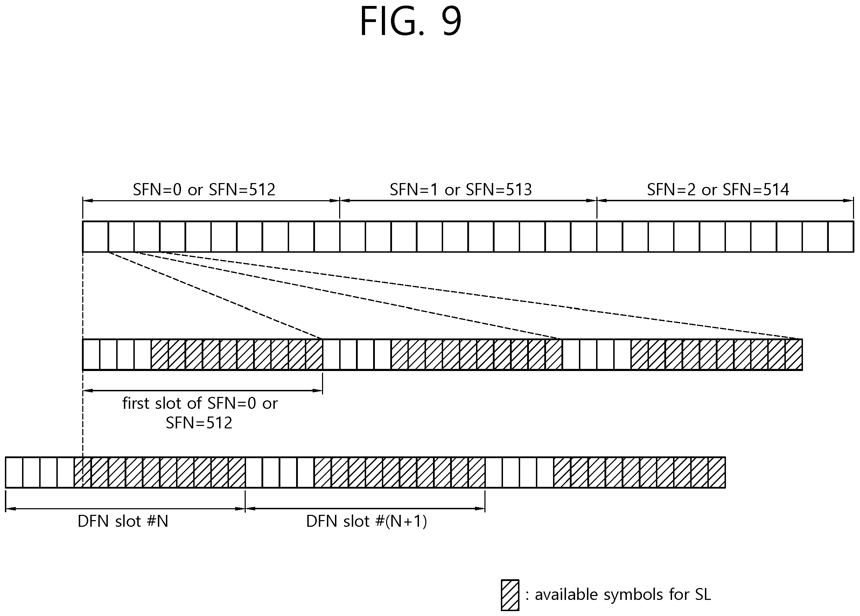

FIG. 9 is a diagram for explaining a problem in which a UE cannot accurately determine a location of a reference logical slot of SL CG resources if time synchronization is not aligned between the Uu link and the SL. The embodiment of FIG. 9 may be combined with various embodiments of the present disclosure.

In the embodiment of FIG. 9, it is assumed that a SL logical slot belonging to a resource pool should include at least 10 SL symbols. That is, the starting symbol (i.e., sl-StartSymbol) used for SL in the slot may be the fifth symbol (i.e., sl-StartSymbol = sym4), and the number of symbols (sl-LengthSymbols) used for SL in a slot may be 10. Furthermore, in the embodiment of FIG. 9, it is assumed that the first slot within SFN=0 or SFN=512 includes 10 SL symbols, and the boundary is not aligned between DFN and SFN. In this case, according to the current standard, the UE may use the first logical slot of the associated resource pool after the starting time of the closest SFN=0 or SFN=512 as a reference logical slot. In this case, unlike the embodiment of FIG. 8, on the UE side, it may be ambiguous whether DFN slot #N or DFN slot #(N+1) should be used as the reference logical slot. If the above ambiguity is not resolved, the UE may not accurately determine the location of the CG resources allocated by the base station. Furthermore, if the CG resources are determined by different methods between UEs based on UE implementation, collision may occur in SL communication between the UEs even though the base station allocates different CG resources to the UEs.

Accordingly, based on an embodiment of the present disclosure, a method for determining SL CG type 1 resources without ambiguity even if time synchronization is not aligned between the Uu link and the SL, and an apparatus supporting the method are proposed.

As described above, if the time synchronization is not aligned between the Uu link and the SL (e.g., if the SFN = 0 time and the boundary of the SL logical slot are not aligned each other), in Table 9, ambiguity may exist in determining the total number of SL logical slots ($N^{RP}_{slot}$) belonging to one SFN period, the time for the first SL logical slot to which sl_TimeOffsetCGType1_RP is applied, and referenceSlot_RP. Hereinafter, a method for removing the ambiguity will be described in detail.

Based on an embodiment of the present disclosure, in the case of a reference time to which the sl_TimeOffsetCGType1_RP is applied, the UE may determine a complete SL logical slot belonging to a SL resource pool that exists at the earliest time thereafter, including the SFN=0 time, as the reference time. For example, in the case of the reference time to which the sl_TimeOffsetCGType1_RP is applied, the UE may determine the starting time of the complete SL logical slot belonging to the SL resource pool that exists at the earliest time thereafter, including the SFN=0 time, as the reference time.

For example, in case of a normal CP, the complete SL logical slot may be a SL logical slot including 14 OFDM symbols. For example, in the case of an extended CP, the complete SL logical slot may be a SL logical slot including 12 OFDM symbols.

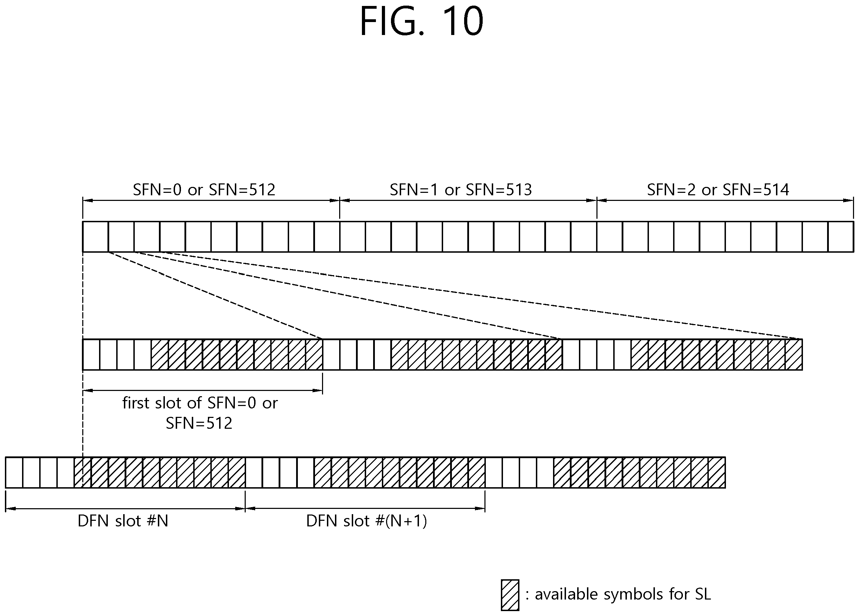

FIG. 10 shows a method for a UE to determine a complete SL logical slot as a reference logical slot, based on an embodiment of the present disclosure. The embodiment of FIG. 10 may be combined with various embodiments of the present disclosure.

In the embodiment of FIG. 10, it is assumed that a SL logical slot belonging to a resource pool should include at least 10 SL symbols. That is, the starting symbol (i.e., sl-StartSymbol) used for SL in the slot may be the fifth symbol (i.e., sl-StartSymbol = sym4), and the number of symbols (sl-LengthSymbols) used for SL in a slot may be 10. Furthermore, in the embodiment of FIG. 10, it is assumed that the first slot within SFN=0 or SFN=512 includes 10 SL symbols, and the boundary is not aligned between DFN and SFN. In this case, the UE may use the first complete SL logical slot of the associated resource pool after the starting time of the closest SFN=0 or SFN=512 as a reference logical slot. That is, DFN slot #N is a SL logical slot belonging to the SL resource pool, but is not a complete SL logical slot, so the UE may use DFN slot #(N+1) as a reference logical slot. In addition, the UE may determine that the first SL CG resource within the period occurs in a slot spaced apart from the DFN slot #(N+1) by an offset.

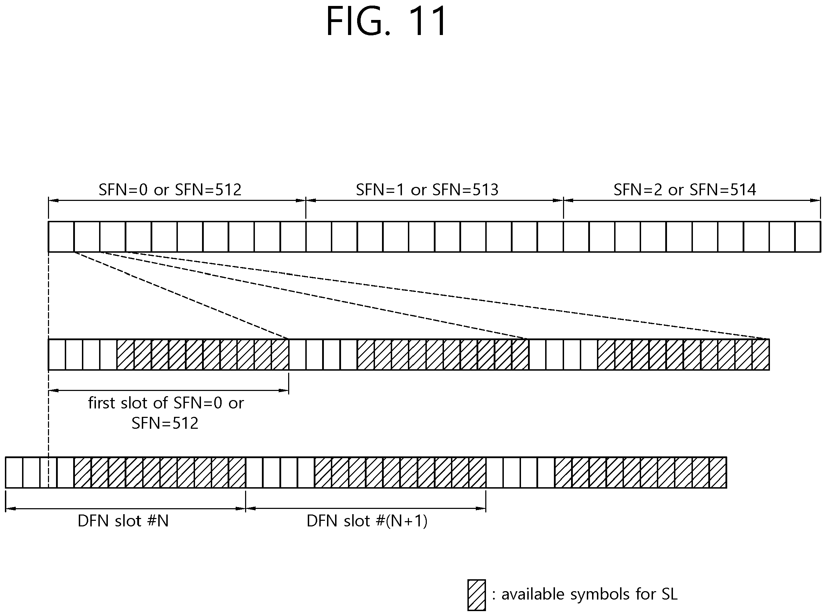

FIG. 11 shows a method for a UE to determine a complete SL logical slot as a reference logical slot, based on an embodiment of the present disclosure. The embodiment of FIG. 11 may be combined with various embodiments of the present disclosure.

In the embodiment of FIG. 11, it is assumed that a SL logical slot belonging to a resource pool should include at least 10 SL symbols. That is, the starting symbol (i.e., sl-StartSymbol) used for SL in the slot may be the fifth symbol (i.e., sl-StartSymbol = sym4), and the number of symbols (sl-LengthSymbols) used for SL in a slot may be 10. Furthermore, in the embodiment of FIG. 11, it is assumed that the first slot within SFN=0 or SFN=512 includes 10 SL symbols, and the boundary is not aligned between DFN and SFN. In this case, the UE may use the first complete SL logical slot of the associated resource pool after the starting time of the closest SFN=0 or SFN=512 as a reference logical slot. That is, DFN slot #N is a SL logical slot belonging to the SL resource pool, but is not a complete SL logical slot, so the UE may use DFN slot #(N+1) as a reference logical slot. In addition, the UE may determine that the first SL CG resource within the period occurs in a slot spaced apart from the DFN slot #(N+1) by an offset.

Based on an embodiment of the present disclosure, in the case of a reference time to which the sl_TimeOffsetCGType1_RP is applied, the UE may determine a complete SL logical slot belonging to a SL resource pool that exists at the earliest time thereafter, including the SFN=0 time, as the reference time. For example, in the case of the reference time to which the sl_TimeOffsetCGType1_RP is applied, the UE may determine the starting time of the complete SL logical slot belonging to the SL resource pool that exists at the earliest time thereafter, including the SFN=0 time, as the reference time.

For example, the complete SL logical slot may be a SL logical slot including at least N SL symbols after the starting time of SFN = 0 or SFN = 512 among SL logical slots belonging to the resource pool. For example, the N may be the number or length of symbols for SL within one slot configured for each SL BWP.

Referring to FIG. 10, the UE may use the first complete SL logical slot of the associated resource pool after the starting time of the closest SFN=0 or SFN=512 as a reference logical slot. That is, DFN slot #N is a SL logical slot belonging to the SL resource pool, but since it includes only 9 SL symbols after the starting time of SFN=0 or SFN=512, DFN slot #N is not a complete SL logical slot. Accordingly, the UE may use DFN slot #(N+1) as the reference logical slot. In addition, the UE may determine that the first SL CG resource within the period occurs in a slot spaced apart from the DFN slot #(N+1) by an offset.

Referring to FIG. 11, the UE may use the first complete SL logical slot of the associated resource pool after the starting time of the closest SFN=0 or SFN=512 as a reference logical slot. That is, since DFN slot #N is a SL logical slot belonging to the SL resource pool and includes 10 SL symbols after the starting time of SFN=0 or SFN=512, DFN slot #N is a complete SL logical slot. Accordingly, the UE may use DFN slot #N as the reference logical slot. In addition, the UE may determine that the first SL CG resource within the period occurs in a slot spaced apart from the DFN slot #N by an offset.

For example, the $N^{RP}_{slot}$ may be determined as the number of complete SL logical slots existing within 10240ms based on the reference time. For example, the UE may determine the $N^{RP}_{slot}$ as the number of complete SL logical slots existing within 10240ms based on the reference time.

For example, the sl_TimeOffsetCGType1_RP and the sl_periodCG_RP may be configured as the number of complete SL logical slots.

For example, the referenceSlot_RP may be configured as a complete SL logical slot belonging to the SL resource pool that exists at the earliest time thereafter, including the reference time or the time after 5120 ms from the reference time. For example, the UE may determine the complete SL logical slot belonging to the SL resource pool that exists at the earliest time thereafter, including the reference time or the time after 5120 ms from the reference time, as the referenceSlot_RP.

For example, the referenceSlot_RP may be configured as the starting time of a complete SL logical slot belonging to the SL resource pool that exists at the earliest time thereafter, including the reference time or the time after 5120 ms from the reference time. For example, the UE may determine the starting time of the complete SL logical slot belonging to the SL resource pool that exists at the earliest time thereafter, including the reference time or the time after 5120 ms from the reference time, as the referenceSlot_RP.

For example, time_reference for CG type 1 transmission resource determination may be configured to the UE. For example, the time_reference may be a time after a specific offset based on the SFN=0 time or the DFN=0 time. For example, the specific offset may be 0 ms, 5120 ms, a time corresponding to frame 0 or 512 based on a physical frame, or a time corresponding to frame 0 or 512 based on a SL logical frame (belonging to the SL resource pool). For example, the referenceSlot_RP time corresponding to sl_TimeOffsetCGType1_RP=0 may be a time when the UE receives higher layer signaling (e.g., RRC signaling) for configuring/indicating CG type 1 transmission resources, a time when the UE confirms receipt of the higher layer signaling by successfully decoding the higher layer signaling, or a time corresponding to a SL logical slot (belonging to the SL resource pool), which is temporally closest (to the start of the slot), earliest (to the start of the slot) after the time_reference, or latest (to the start of the slot) before the time_reference, based on the time_reference time that is temporally closest, the earliest temporally later, or the latest temporally earlier, from a time when the UE reports to the base station that it has received the higher layer signaling after confirming the reception. In this case, the time corresponding to the SL logical slot (belonging to the SL resource pool) may be the time corresponding to the complete SL logical slot.

For example, the referenceSlot_RP may be configured as a complete SL logical slot corresponding to slot index = $N^{RP}_{slot}/2$ from the reference time or the reference time (slot index = 0). For example, the referenceSlot_RP may be configured as the starting time of the complete SL logical slot corresponding to slot index = $N^{RP}_{slot}/2$ from the reference time or the reference time (slot index = 0).

For example, the UE may determine CG type 1 and CG type 2 resources based on Table 10 by applying the above proposal.

[Table 10]

| | The detail equation for CG type1 is as following: |
|---|---|
| Current_slot = Where: | $(referenceSlot\_RP + sl\_TimeOffsetCGType1\_RP + S \times sl\_periodCG\_RP) \, modulo \, N^{RP}_{slot}$ (1) |
| | ✔ Ref_Period : the reference period having 10240ms duration, which starts from the first whole SL logical slot not earlier than SFN=0 or referenceSlot_RP, and repeats with period of 10240ms |
| | ✔ $N^{RP}_{slot}$ : the total number of SL logical slots of the associated resource pool within Ref_Period |
| | ✔ sl_TimeOffsetCGType1_RP : the slot offset between the first CG resource slot and referenceSlot_RP |
| | ✔ sl_periodCG_RP : the period of SL CG resources. |
| | ✔ Current_slot : current logical slot in the resource pool whose value range is [0, $N^{RP}_{slot} - 1$] |
| | ✔ S : the index of CG radio resource, S>=0 |
| | ✔ referenceSlot_RP : |
| | Alt 1. the reference slot which could be either 1$^{st}$ slot within Ref_Period (i.e. the slot index equals to zero) or the slot of $index = N^{RP}_{slot}/2$ |
| | Alt 2. the reference slot which could be either 1$^{st}$ slot within Ref_Period (i.e. the slot index equals to zero) or the first whole SL slot not earlier than 512ms after the start of Ref_Period |
| For CG type2, the equation is as following: | $Current\_slot = (Slot\_start + S \times sl\_periodCG\_RP) \, modulo \, N^{RP}_{slot}$ (2) |

(continued)

| Where: |
| Parameters Current_slot, S, sl_periodCG_RP share the same meaning as those in equation (1). Slot_start refers the slot index of the first PSSCH duration after the configured sidelink grant was (re-)initialised. |

For example, whether the rule is applied and/or the proposed method/rule related parameter value of the present disclosure may be configured/allowed specifically (or differently or independently) for a service type. For example, whether the rule is applied and/or the proposed method/rule related parameter value of the present disclosure may be configured/allowed specifically (or differently or independently) for a (LCH or service) priority. For example, whether the rule is applied and/or the proposed method/rule related parameter value of the present disclosure may be configured/allowed specifically (or differently or independently) for a QoS requirement (e.g., latency, reliability, minimum communication range). For example, whether the rule is applied and/or the proposed method/rule related parameter value of the present disclosure may be configured/allowed specifically (or differently or independently) for a PQI parameter. For example, whether the rule is applied and/or the proposed method/rule related parameter value of the present disclosure may be configured/allowed specifically (or differently or independently) for a HARQ feedback ENABLED LCH/MAC PDU (transmission). For example, whether the rule is applied and/or the proposed method/rule related parameter value of the present disclosure may be configured/allowed specifically (or differently or independently) for a HARQ feedback DISABLED LCH/MAC PDU (transmission). For example, whether the rule is applied and/or the proposed method/rule related parameter value of the present disclosure may be configured/allowed specifically (or differently or independently) for a CBR measurement value of a resource pool. For example, whether the rule is applied and/or the proposed method/rule related parameter value of the present disclosure may be configured/allowed specifically (or differently or independently) for a SL cast type (e.g., unicast, groupcast, broadcast). For example, whether the rule is applied and/or the proposed method/rule related parameter value of the present disclosure may be configured/allowed specifically (or differently or independently) for a SL groupcast HARQ feedback option (e.g., NACK only feedback, ACK/NACK feedback, NACK only feedback based on TX-RX distance). For example, whether the rule is applied and/or the proposed method/rule related parameter value of the present disclosure may be configured/allowed specifically (or differently or independently) for a SL mode 1 CG type (e.g., SL CG type 1 or SL CG type 2). For example, whether the rule is applied and/or the proposed method/rule related parameter value of the present disclosure may be configured/allowed specifically (or differently or independently) for a SL mode type (e.g., mode 1 or mode 2). For example, whether the rule is applied and/or the proposed method/rule related parameter value of the present disclosure may be configured/allowed specifically (or differently or independently) for a resource pool. For example, whether the rule is applied and/or the proposed method/rule related parameter value of the present disclosure may be configured/allowed specifically (or differently or independently) for whether a PSFCH resource is a configured resource pool. For example, whether the rule is applied and/or the proposed method/rule related parameter value of the present disclosure may be configured/allowed specifically (or differently or independently) for a source (L2) ID. For example, whether the rule is applied and/or the proposed method/rule related parameter value of the present disclosure may be configured/allowed specifically (or differently or independently) for a destination (L2) ID. For example, whether the rule is applied and/or the proposed method/rule related parameter value of the present disclosure may be configured/allowed specifically (or differently or independently) for a PC5 RRC connection link. For example, whether the rule is applied and/or the proposed method/rule related parameter value of the present disclosure may be configured/allowed specifically (or differently or independently) for a SL link. For example, whether the rule is applied and/or the proposed method/rule related parameter value of the present disclosure may be configured/allowed specifically (or differently or independently) for a connection state (e.g., RRC CONNECTED state, IDLE state, INACTIVE state) (with a base station). For example, whether the rule is applied and/or the proposed method/rule related parameter value of the present disclosure may be configured/allowed specifically (or differently or independently) for a SL HARQ process (ID). For example, whether the rule is applied and/or the proposed method/rule related parameter value of the present disclosure may be configured/allowed specifically (or differently or independently) for whether to perform SL DRX operation (of TX UE or RX UE). For example, whether the rule is applied and/or the proposed method/rule related parameter value of the present disclosure may be configured/allowed specifically (or differently or independently) for whether a power saving (TX or RX) UE. For example, whether the rule is applied and/or the proposed method/rule related parameter value of the present disclosure may be configured/allowed specifically (or differently or independently) for a case where (from a specific UE perspective) PSFCH TX and PSFCH RX (and/or a plurality of PSFCH TX (exceeding UE capabilities)) overlap (and/or PSFCH TX (and/or PSFCH RX) is omitted). For example, whether the rule is applied and/or the proposed method/rule related parameter value of the present disclosure may be configured/allowed specifically (or differently or independently) for a case where the RX UE actually (successfully) receives PSCCH (and/or PSSCH) (re)transmission from the TX UE.

For example, in the present disclosure, the term "configure/configured (or designate/designated)" may be extended and interpreted as a form in which the base station informs the UE through a pre-defined (physical layer or higher layer) channel/signal (e.g., SIB, RRC, MAC CE) (and/or a form in which the UE informs other UEs through a pre-defined (physical layer or higher layer) channel/signal (e.g., SL MAC CE, PC5 RRC)).

For example, in the present disclosure, the term "PSFCH" may be extended and interpreted as (NR or LTE) PSSCH (and/or (NR or LTE) PSCCH) (and/or (NR or LTE) SL SSB (and/or UL channel/signal)). In addition, the proposed methods of the present disclosure may be used in combination with each other (as a new type).

For example, in the present disclosure, a specific threshold may refer to a threshold pre-defined or (pre-)configured by the network or the base station or the upper layer (including the application layer) of the UE. For example, in the present disclosure, a specific configured threshold may refer to a value pre-defined or (pre-)configured by the network or the base station or the upper layer (including the application layer) of the UE. For example, the operation configured by the network/base station may refer to the operation in which the base station (pre-)configures to the UE through higher layer RRC signaling, configures/signals to the UE through MAC CE, or signals the UE through DCI.

Based on various embodiments of the present disclosure, if the UE receives information related to SL CG resources from the base station, the UE can determine without ambiguity slots in which SL CG resources occur. That is, the UE may use the first complete logical slot of the associated resource pool after the starting time of the closest SFN=0 or SFN=512 as the reference logical slot, and the UE may determine slots in which SL CG resources occur by applying an offset from the reference logical slot. Through this, it is possible to prevent a problem in which SL CG resources differently allocated by the base station collide between UEs even if the boundary is not aligned between SFN and DFN.

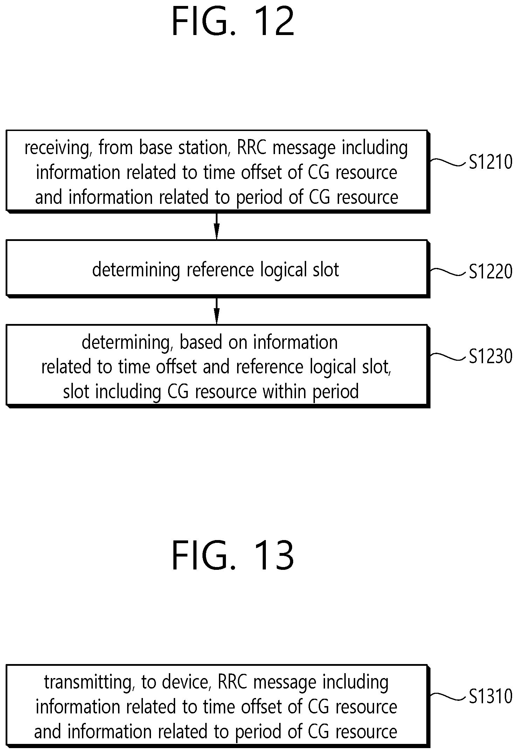

FIG. 12 shows a method for a first device to perform wireless communication, based on an embodiment of the present disclosure. The embodiment of FIG. 12 may be combined with various embodiments of the present disclosure.

Referring to FIG. 12, in step S 1210, the first device may receive, from a base station, a radio resource control (RRC) message including information related to a time offset of a configured grant (CG) resource and information related to a period of the CG resource. In step S 1220, the first device may determine a reference logical slot. In step S 1230, the first device may determine, based on the information related to the time offset and the reference logical slot, a slot including the CG resource within the period. For example, the slot may occur after the time offset from the reference logical slot, and the reference logical slot may be a complete sidelink (SL) logical slot closest in a time domain after a starting time of a system frame number (SFN) with a first index.

For example, a slot boundary of a direct frame number (DFN) related to synchronization of a global navigation satellite system (GNSS) and a slot boundary of the SFN related to synchronization of the base station may not be aligned.

For example, based on that a first SL logical slot, belonging to a SL resource pool, closest after the starting time of the SFN with the first index is not the complete SL logical slot, the reference logical slot may be a second SL logical slot, belonging to the SL resource pool, closest after the first SL logical slot.

For example, based on a normal cyclic prefix (NCP) configured for the first device, the complete SL logical slot may be a slot including 14 symbols, after the starting time of the SFN with the first index, among SL logical slots belonging to a SL resource pool.

For example, based on an extended cyclic prefix (ECP) configured for the first device, the complete SL logical slot may be a slot including 12 symbols, after the starting time of the SFN with the first index, among SL logical slots belonging to a SL resource pool.

For example, based on that a number of SL symbols within one slot is configured to be 14, the complete SL logical slot may be a slot including 14 symbols, after the starting time of the SFN with the first index, among SL logical slots belonging to a SL resource pool.

For example, based on that a number of SL symbols within one slot is configured to be 12, the complete SL logical slot may be a slot including 12 symbols, after the starting time of the SFN with the first index, among SL logical slots belonging to a SL resource pool.

For example, based on that a number of SL symbols within one slot is configured to be N, SL logical slots belonging to a SL resource pool may include at least N SL symbols, and N may be a positive integer. For example, the complete SL logical slot may be a slot including at least N SL symbols, after the starting time of the SFN with the first index, among the SL logical slots. For example, based on that a first SL logical slot, belonging to the SL resource pool, closest after the starting time of the SFN with the first index includes M SL symbols after the starting time, the reference logical slot may be a second SL logical slot closest after the first SL logical slot, and M may be a positive integer less than N. For example, M SL symbols of at least N SL symbols included in the first SL logical slot may occur after the starting time of the SFN with the first index.

For example, the first index may be 0 or 512.

For example, the CG resource may occur at an interval of the period from the slot.

The proposed method can be applied to the device(s) based on various embodiments of the present disclosure. First, the processor 102 of the first device 100 may control the transceiver 106 to receive, from a base station, a radio resource control (RRC) message including information related to a time offset of a configured grant (CG) resource and information related to a period of the CG resource. In addition, the processor 102 of the first device 100 may determine a reference logical slot. In addition, the processor 102 of the first device 100 may determine, based on the information related to the time offset and the reference logical slot, a slot including the CG resource within the period. For example, the slot may occur after the time offset from the reference logical slot, and the reference logical slot may be a complete sidelink (SL) logical slot closest in a time domain after a starting time of a system frame number (SFN) with a first index.

Based on an embodiment of the present disclosure, a first device adapted to perform wireless communication may be provided. For example, the first device may comprise: one or more memories storing instructions; one or more transceivers; and one or more processors connected to the one or more memories and the one or more transceivers. For example, the one or more processors may execute the instructions to: receive, from a base station, a radio resource control (RRC) message including information related to a time offset of a configured grant (CG) resource and information related to a period of the CG resource; determine a reference logical slot; and determine, based on the information related to the time offset and the reference logical slot, a slot including the CG resource within the period. For example, the slot may occur after the time offset from the reference logical slot, and the reference logical slot may be a complete sidelink (SL) logical slot closest in a time domain after a starting time of a system frame number (SFN) with a first index.

Based on an embodiment of the present disclosure, an apparatus adapted to control a first user equipment (UE) configured to perform wireless communication may be provided. For example, the apparatus may comprise: one or more processors; and one or more memories operably connected to the one or more processors and storing instructions. For example, the one or more processors may execute the instructions to: receive, from a base station, a radio resource control (RRC) message including information related to a time offset of a configured grant (CG) resource and information related to a period of the CG resource; determine a reference logical slot; and determine, based on the information related to the time offset and the reference logical slot, a slot including the CG resource within the period. For example, the slot may occur after the time offset from the reference logical slot, and the reference logical slot may be a complete sidelink (SL) logical slot closest in a time domain after a starting time of a system frame number (SFN) with a first index.

Based on an embodiment of the present disclosure, a non-transitory computer-readable storage medium storing instructions may be provided. For example, the non-transitory computer-readable storage medium storing instructions, when executed, may cause a first device to: receive, from a base station, a radio resource control (RRC) message including information related to a time offset of a configured grant (CG) resource and information related to a period of the CG resource; determine a reference logical slot; and determine, based on the information related to the time offset and the reference logical slot, a slot including the CG resource within the period. For example, the slot may occur after the time offset from the reference logical slot, and the reference logical slot may be a complete sidelink (SL) logical slot closest in a time domain after a starting time of a system frame number (SFN) with a first index.

FIG. 13 shows a method for a base station to perform wireless communication, based on an embodiment of the present disclosure. The embodiment of FIG. 13 may be combined with various embodiments of the present disclosure.

Referring to FIG. 13, in step S 1310, the base station may transmit, to a device, a radio resource control (RRC) message including information related to a time offset of a configured grant (CG) resource and information related to a period of the CG resource. For example, a slot including the CG resource within the period may be determined by the device based on the information related to the time offset and a reference logical slot. For example, the slot may occur after the time offset from the reference logical slot, and the reference logical slot may be a complete sidelink (SL) logical slot closest in a time domain after a starting time of a system frame number (SFN) with a first index.

The proposed method can be applied to the device(s) based on various embodiments of the present disclosure. First, the processor 202 of the base station 200 may control the transceiver 206 to transmit, to a device, a radio resource control (RRC) message including information related to a time offset of a configured grant (CG) resource and information related to a period of the CG resource. For example, a slot including the CG resource within the period may be determined by the device based on the information related to the time offset and a reference logical slot. For example, the slot may occur after the time offset from the reference logical slot, and the reference logical slot may be a complete sidelink (SL) logical slot closest in a time domain after a starting time of a system frame number (SFN) with a first index.

Based on an embodiment of the present disclosure, a base station adapted to perform wireless communication may be provided. For example, the base station may comprise: one or more memories storing instructions; one or more transceivers; and one or more processors connected to the one or more memories and the one or more transceivers. For example, the one or more processors may execute the instructions to: transmit, to a device, a radio resource control (RRC) message including information related to a time offset of a configured grant (CG) resource and information related to a period of the CG resource. For example, a slot including the CG resource within the period may be determined by the device based on the information related to the time offset and a reference logical slot. For example, the slot may occur after the time offset from the reference logical slot, and the reference logical slot may be a complete sidelink (SL) logical slot closest in a time domain after a starting time of a system frame number (SFN) with a first index.

Based on an embodiment of the present disclosure, an apparatus adapted to control a base station adapted to perform wireless communication may be provided. For example, the apparatus may comprise: one or more processors;

and one or more memories operably connected to the one or more processors and storing instructions. For example, the one or more processors may execute the instructions to: transmit, to a user equipment (UE), a radio resource control (RRC) message including information related to a time offset of a configured grant (CG) resource and information related to a period of the CG resource. For example, a slot including the CG resource within the period may be determined by the UE based on the information related to the time offset and a reference logical slot. For example, the slot may occur after the time offset from the reference logical slot, and the reference logical slot may be a complete sidelink (SL) logical slot closest in a time domain after a starting time of a system frame number (SFN) with a first index.

Based on an embodiment of the present disclosure, a non-transitory computer-readable storage medium storing instructions may be provided. For example, the non-transitory computer-readable storage medium storing instructions, when executed, may cause a base station to: transmit, to a device, a radio resource control (RRC) message including information related to a time offset of a configured grant (CG) resource and information related to a period of the CG resource. For example, a slot including the CG resource within the period may be determined by the device based on the information related to the time offset and a reference logical slot. For example, the slot may occur after the time offset from the reference logical slot, and the reference logical slot may be a complete sidelink (SL) logical slot closest in a time domain after a starting time of a system frame number (SFN) with a first index.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

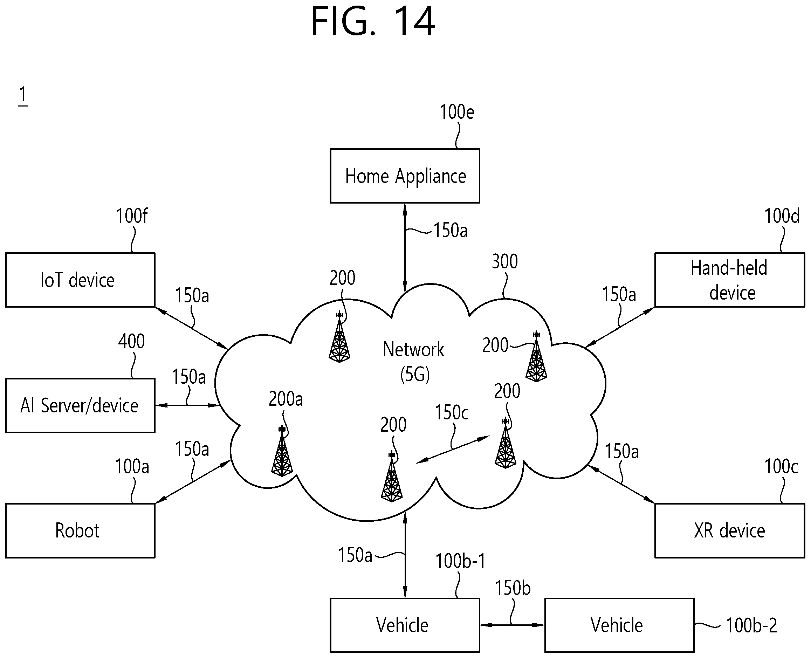

FIG. 14 shows a communication system 1, based on an embodiment of the present disclosure. The embodiment of FIG. 14 may be combined with various embodiments of the present disclosure.

Referring to FIG. 14, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

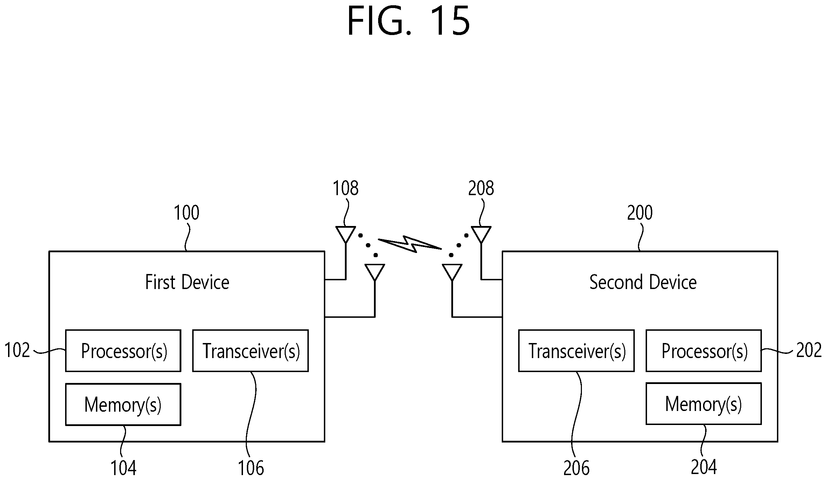

FIG. 15 shows wireless devices, based on an embodiment of the present disclosure. The embodiment of FIG. 15 may be combined with various embodiments of the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

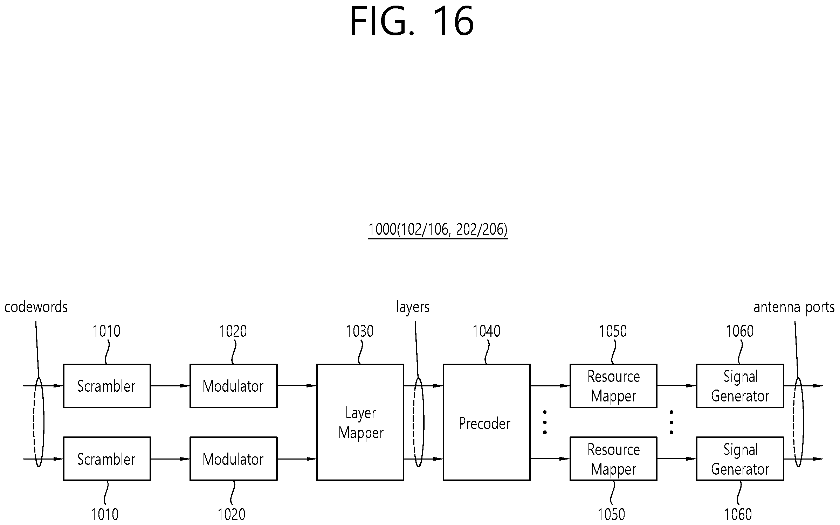

FIG. 16 shows a signal process circuit for a transmission signal, based on an embodiment of the present disclosure. The embodiment of FIG. 16 may be combined with various embodiments of the present disclosure.

Referring to FIG. 16, a signal processing circuit 1000 may include scramblers 1010, modulators 1020, a layer mapper 1030, a precoder 1040, resource mappers 1050, and signal generators 1060. An operation/function of FIG. 16 may be performed, without being limited to, the processors 102 and 202 and/or the transceivers 106 and 206 of FIG. 15. Hardware elements of FIG. 16 may be implemented by the processors 102 and 202 and/or the transceivers 106 and 206 of FIG. 15. For example, blocks 1010 to 1060 may be implemented by the processors 102 and 202 of FIG. 15. Alternatively, the blocks 1010 to 1050 may be implemented by the processors 102 and 202 of FIG. 15 and the block 1060 may be implemented by the transceivers 106 and 206 of FIG. 15.

Codewords may be converted into radio signals via the signal processing circuit 1000 of FIG. 16. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 16. For example, the wireless devices (e.g., 100 and 200 of FIG. 15) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

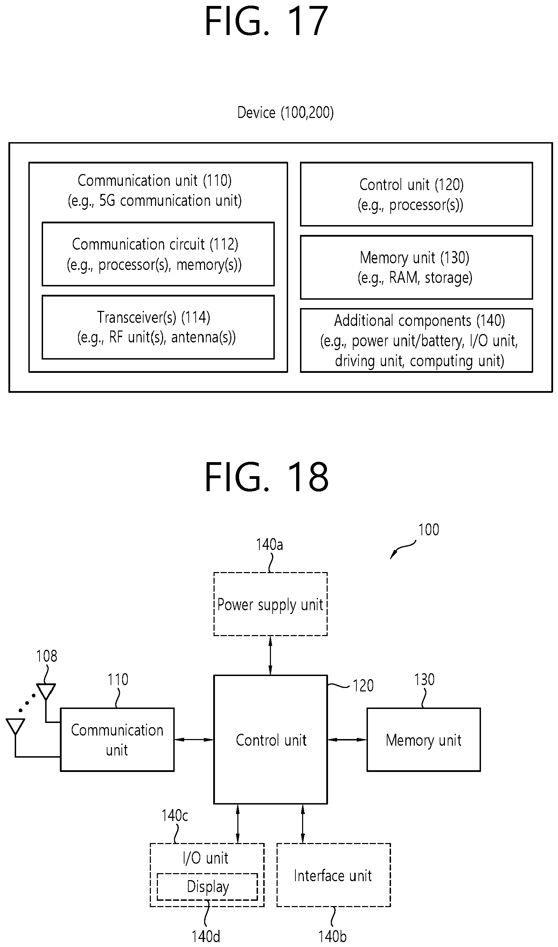

FIG. 17 shows another example of a wireless device, based on an embodiment of the present disclosure. The wireless device may be implemented in various forms according to a use-case/service (refer to FIG. 14). The embodiment of FIG. 17 may be combined with various embodiments of the present disclosure.

Referring to FIG. 17, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 17 will be described in detail with reference to the drawings.

FIG. 18 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 18 may be combined with various embodiments of the present disclosure.

Referring to FIG. 18, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 17, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

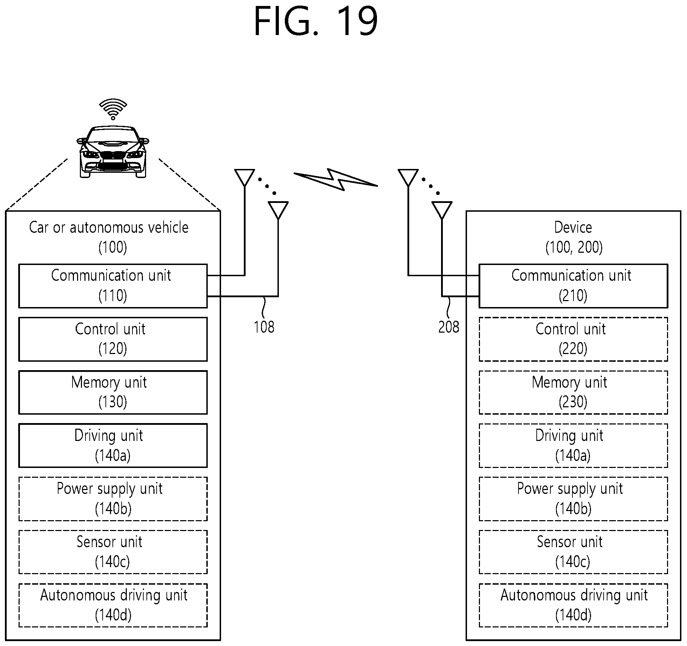

FIG. 19 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 19 may be combined with various embodiments of the present disclosure.

Referring to FIG. 19, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1. A method for performing wireless communication by a first device, the method comprising:

   receiving, from a base station, a radio resource control (RRC) message including information related to a time offset of a configured grant (CG) resource and information related to a period of the CG resource;
   determining a reference logical slot; and
   determining, based on the information related to the time offset and the reference logical slot, a slot including the CG resource within the period,
   wherein the slot occurs after the time offset from the reference logical slot, and
   wherein the reference logical slot is a complete sidelink (SL) logical slot closest in a time domain after a starting time of a system frame number (SFN) with a first index.

2. The method of claim 1, wherein a slot boundary of a direct frame number (DFN) related to synchronization of a global navigation satellite system (GNSS) and a slot boundary of the SFN related to synchronization of the base station are not aligned.

3. The method of claim 1, wherein, based on that a first SL logical slot, belonging to a SL resource pool, closest after the starting time of the SFN with the first index is not the complete SL logical slot, the reference logical slot is a second SL logical slot, belonging to the SL resource pool, closest after the first SL logical slot.

4. The method of claim 1, wherein, based on a normal cyclic prefix (NCP) configured for the first device, the complete SL logical slot is a slot including 14 symbols, after the starting time of the SFN with the first index, among SL logical slots belonging to a SL resource pool.

5. The method of claim 1, wherein, based on an extended cyclic prefix (ECP) configured for the first device, the complete SL logical slot is a slot including 12 symbols, after the starting time of the SFN with the first index, among SL logical slots belonging to a SL resource pool.

6. The method of claim 1, wherein, based on that a number of SL symbols within one slot is configured to be 14, the complete SL logical slot is a slot including 14 symbols, after the starting time of the SFN with the first index, among SL logical slots belonging to a SL resource pool.

7. The method of claim 1, wherein, based on that a number of SL symbols within one slot is configured to be 12, the complete SL logical slot is a slot including 12 symbols, after the starting time of the SFN with the first index, among SL logical slots belonging to a SL resource pool.

8. The method of claim 1, wherein, based on that a number of SL symbols within one slot is configured to be N, SL logical slots belonging to a SL resource pool include at least N SL symbols, and
wherein N is a positive integer.

9. The method of claim 8, wherein the complete SL logical slot is a slot including at least N SL symbols, after the starting time of the SFN with the first index, among the SL logical slots.

10. The method of claim 9, wherein, based on that a first SL logical slot, belonging to the SL resource pool, closest after the starting time of the SFN with the first index includes M SL symbols after the starting time, the reference logical slot is a second SL logical slot closest after the first SL logical slot, and
wherein M is a positive integer less than N.

11. The method of claim 10, wherein M SL symbols of at least N SL symbols included in the first SL logical slot occur after the starting time of the SFN with the first index.

12. The method of claim 1, wherein the first index is 0 or 512.

13. The method of claim 1, wherein the CG resource occurs at an interval of the period from the slot.

14. A first device adapted to perform wireless communication, the first device comprising:

one or more memories storing instructions;
one or more transceivers; and
one or more processors connected to the one or more memories and the one or more transceivers, wherein the one or more processors execute the instructions to:

receive, from a base station, a radio resource control (RRC) message including information related to a time offset of a configured grant (CG) resource and information related to a period of the CG resource;
determine a reference logical slot; and
determine, based on the information related to the time offset and the reference logical slot, a slot including the CG resource within the period,
wherein the slot occurs after the time offset from the reference logical slot, and
wherein the reference logical slot is a complete sidelink (SL) logical slot closest in a time domain after a starting time of a system frame number (SFN) with a first index.

15. An apparatus adapted to control a first user equipment (UE), the apparatus comprising:

one or more processors; and
one or more memories operably connected to the one or more processors and storing instructions, wherein the one or more processors execute the instructions to:

receive, from a base station, a radio resource control (RRC) message including information related to a time offset of a configured grant (CG) resource and information related to a period of the CG resource;
determine a reference logical slot; and
determine, based on the information related to the time offset and the reference logical slot, a slot including the CG resource within the period,
wherein the slot occurs after the time offset from the reference logical slot, and
wherein the reference logical slot is a complete sidelink (SL) logical slot closest in a time domain after a starting time of a system frame number (SFN) with a first index.

16. A non-transitory computer-readable storage medium storing instructions that, when executed, cause a first device to:

receive, from a base station, a radio resource control (RRC) message including information related to a time offset of a configured grant (CG) resource and information related to a period of the CG resource;
determine a reference logical slot; and
determine, based on the information related to the time offset and the reference logical slot, a slot including the CG resource within the period,
wherein the slot occurs after the time offset from the reference logical slot, and

wherein the reference logical slot is a complete sidelink (SL) logical slot closest in a time domain after a starting time of a system frame number (SFN) with a first index.

17. A method for performing wireless communication by a base station, the method comprising:

transmitting, to a device, a radio resource control (RRC) message including information related to a time offset of a configured grant (CG) resource and information related to a period of the CG resource,
wherein a slot including the CG resource within the period is determined by the device based on the information related to the time offset and a reference logical slot,
wherein the slot occurs after the time offset from the reference logical slot, and
wherein the reference logical slot is a complete sidelink (SL) logical slot closest in a time domain after a starting time of a system frame number (SFN) with a first index.

18. A base station adapted to perform wireless communication, the base station comprising:

one or more memories storing instructions;
one or more transceivers; and
one or more processors connected to the one or more memories and the one or more transceivers, wherein the one or more processors execute the instructions to:

transmit, to a device, a radio resource control (RRC) message including information related to a time offset of a configured grant (CG) resource and information related to a period of the CG resource,
wherein a slot including the CG resource within the period is determined by the device based on the information related to the time offset and a reference logical slot,
wherein the slot occurs after the time offset from the reference logical slot, and
wherein the reference logical slot is a complete sidelink (SL) logical slot closest in a time domain after a starting time of a system frame number (SFN) with a first index.

19. An apparatus adapted to control a base station, the apparatus comprising:

one or more processors; and
one or more memories operably connected to the one or more processors and storing instructions, wherein the one or more processors execute the instructions to:

transmit, to a user equipment (UE), a radio resource control (RRC) message including information related to a time offset of a configured grant (CG) resource and information related to a period of the CG resource,
wherein a slot including the CG resource within the period is determined by the UE based on the information related to the time offset and a reference logical slot,
wherein the slot occurs after the time offset from the reference logical slot, and
wherein the reference logical slot is a complete sidelink (SL) logical slot closest in a time domain after a starting time of a system frame number (SFN) with a first index.

20. A non-transitory computer-readable storage medium storing instructions that, when executed, cause a base station to:

transmit, to a device, a radio resource control (RRC) message including information related to a time offset of a configured grant (CG) resource and information related to a period of the CG resource,
wherein a slot including the CG resource within the period is determined by the device based on the information related to the time offset and a reference logical slot,
wherein the slot occurs after the time offset from the reference logical slot, and
wherein the reference logical slot is a complete sidelink (SL) logical slot closest in a time domain after a starting time of a system frame number (SFN) with a first index.

# FIG. 1

AMF/UPF

AMF/UPF

30

5GC

NG          NG          NG          NG

20

Xn

gNB          gNB          NG-RAN

Xn          Xn

gNB

10

# FIG. 2

(a)
gNB: SDAP, PDCP, RLC, MAC, PHY
UE: SDAP, PDCP, RLC, MAC, PHY

(b)
AMF: NAS
gNB: RRC, PDCP, RLC, MAC, PHY
UE: NAS, RRC, PDCP, RLC, MAC, PHY

(c)
UE A: SDAP, PDCP, RLC, MAC, PHY
UE B: SDAP, PDCP, RLC, MAC, PHY
PC5-U

(d)
UE A: RRC, PDCP, RLC, MAC, PHY
UE B: RRC, PDCP, RLC, MAC, PHY
PC5-C

# FIG. 3

# FIG. 4

Resource grid

A carrier
(up to 3300 subcarriers,
i.e., 275 RBs)

A BWP

1RB=12 subcarriers

1 RE

1subcarrier

1 symbol

l=0 • • •

k=0

EP 4 290 968 A1

# FIG. 5

PRB N3

$N_{BWP, 2}^{size}$

PRB 1

PRB 0

PRB N2

$N_{BWP, 1}^{size}$

PRB 1

PRB 0

PRB N1

$N_{BWP, 0}^{size}$

PRB 1

PRB 0

CRB 0

$N_{BWP, 2}^{start}$

$N_{BWP, 1}^{start}$

$N_{BWP, 0}^{start}$

Carrier
Bandwidth

Freq.

Time

PRB 0 (Point A) in reference resource block

# FIG. 6

(a)

(b)

# FIG. 7

(a)

(b)

(c)

● : TX UE

⊘ : RX UE

FIG. 8

SFN=0 or SFN=512

SFN=1 or SFN=513

SFN=2 or SFN=514

first slot of SFN=0 or SFN=512

DFN slot #N

DFN slot #(N+1)

▨ : available symbols for SL

FIG. 9

# FIG. 10

EP 4 290 968 A1

SFN=0 or SFN=512    SFN=1 or SFN=513    SFN=2 or SFN=514

first slot of SFN=0 or
SFN=512

DFN slot #N          DFN slot #(N+1)

▨ : available symbols for SL

FIG. 11

# FIG. 12

| receiving, from base station, RRC message including information related to time offset of CG resource and information related to period of CG resource | ~ S1210 |

↓

| determining reference logical slot | ~ S1220 |

↓

| determining, based on information related to time offset and reference logical slot, slot including CG resource within period | ~ S1230 |

# FIG. 13

| transmitting, to device, RRC message including information related to time offset of CG resource and information related to period of CG resource | ~ S1310 |

# FIG. 14

<u>1</u>

# FIG. 15

EP 4 290 968 A1

# FIG. 16

1000(102/106, 202/206)

# FIG. 17

Device (100,200)

| Communication unit (110)<br>(e.g., 5G communication unit) | Control unit (120)<br>(e.g., processor(s)) |
|---|---|
| **Communication circuit (112)**<br>(e.g., processor(s), memory(s)) | Memory unit (130)<br>(e.g., RAM, storage) |
| **Transceiver(s) (114)**<br>(e.g., RF unit(s), antenna(s)) | Additional components (140)<br>(e.g., power unit/battery, I/O unit,<br>driving unit, computing unit) |

# FIG. 18

# FIG. 19

Car or autonomous vehicle (100)
- Communication unit (110)
- Control unit (120)
- Memory unit (130)
- Driving unit (140a)
- Power supply unit (140b)
- Sensor unit (140c)
- Autonomous driving unit (140d)

108

208

Device (100, 200)
- Communication unit (210)
- Control unit (220)
- Memory unit (230)
- Driving unit (140a)
- Power supply unit (140b)
- Sensor unit (140c)
- Autonomous driving unit (140d)

EP 4 290 968 A1

## INTERNATIONAL SEARCH REPORT

| | International application No. |
|---|---|
| | **PCT/KR2022/001635** |

| A. | CLASSIFICATION OF SUBJECT MATTER |
|---|---|

**H04W 72/14**(2009.01)i; **H04W 72/12**(2009.01)i; **H04W 72/04**(2009.01)i; **H04W 4/40**(2018.01)i; **H04W 92/18**(2009.01)i

According to International Patent Classification (IPC) or to both national classification and IPC

| B. | FIELDS SEARCHED |
|---|---|

Minimum documentation searched (classification system followed by classification symbols)

H04W 72/14(2009.01); H04W 72/02(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: V2X(vehicle-to-everything), SL(sidelink), CG(configured grant), 시간 오프셋(time offset), 주기(period), RRC(radio resource control), 기준(reference), 논리적 슬롯(logical slot), SFN(system frame number)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | HUAWEI et al. Correction on the calculation of CG occasion. R2-2008583, 3GPP TSG-RAN WG2 Meeting #111-e. 04 September 2020.<br>See page 3. | 1-20 |
| A | OPPO. SFN misalignment issue on periodicities of non-divisor of 10240 ms. R2-2000697, 3GPP TSG RAN WG2 Meeting #109-e. 14 February 2020.<br>See sections 1-2. | 1-20 |
| A | OPPO. Discussion on resource allocation and HARQ process id of configured grant. R2-2008800, 3GPP TSG RAN WG2 #112-e. 22 October 2020.<br>See sections 1-3. | 1-20 |
| A | OPPO. Remaining issues of mode 1 resource allocation for NR-V2X. R1-2001746, 3GPP TSG RAN WG1 #100bis-e. 11 April 2020.<br>See sections 2.1-8. | 1-20 |
| A | US 2021-0007081 A1 (SAMSUNG ELECTRONICS, LTD.) 07 January 2021 (2021-01-07)<br>See paragraphs [0069]-[0370]; and figures 1-18. | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 April 2022** | **29 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/001635**

| Patent document cited in search report | Publication date (day/month/year) | Patent family member(s) | Publication date (day/month/year) |
|---|---|---|---|
| US 2021-0007081 A1 | 07 January 2021 | KR 10-2021-0003648 A | 12 January 2021 |
| | | WO 2021-002713 A1 | 07 January 2021 |

Form PCT/ISA/210 (patent family annex) (July 2019)